# EUROPEAN PATENT APPLICATION

(11) **EP 4 736 721 A2**
(43) Date of publication of application: **06.05.2026**
(21) Application number: 26162346.6
(22) Date of filing: 23.09.2021
(51) Int. Cl.: A47L 9/16

(54) **CLEANING APPARATUS**

(30) Priority: 12.10.2020 CN 202022260283 U; 13.01.2021 CN 202120085406 U; 13.01.2021 CN 202120082888 U; 13.01.2021 CN 202120084427 U
(62) Divisional of application: 21879223.2
(71) Applicant: Beijing Roborock Technology Co., Ltd., Beijing 102206 (CN)
(72) Inventor: SUN, Qing, Beijing 102206 (CN); LEI, Peng, Beijing 102206 (CN); QIAO, Liang, Beijing 102206 (CN); LIU, Wang, Beijing 102206 (CN)
(74) Representative: Studio Torta S.p.A.

(57) **Abstract**

A cleaning apparatus, including: a suction system; a separation system; a filtration system; and a garbage collection system at least including a first garbage collection cavity (16) configured to collect garbage passing through a primary separation system and a second garbage collection cavity (14) configured to collect garbage passing through a secondary separation system (4), the secondary separation system (4) includes a secondary cyclone separator (A1), and the secondary cyclone separator (A1) includes: at least one cyclone pipe (B1) configured to separate the dirty air; an airflow inlet (A2) configured to provide an inlet allowing an airflow to enter the secondary cyclone separator (A1); an overflow pipe (A3) configured to discharge the airflow from the secondary cyclone separator (A1); a front filter screen (A4) disposed perpendicular to the overflow pipe (A3) and configured to filter the airflow discharged from the overflow pipe (A3); and a front filter screen cover (A5).

## Description

### TECHNICAL FIELD

The present invention relates to the field of cleaning robot technologies, and more particularly to a cleaning apparatus.

### BACKGROUND

A cleaning apparatus, particularly a handheld cleaning apparatus, generally includes a plurality of separation systems, and a plurality of garbage collection cavities corresponding to the plurality of separation systems. During operation, there are sealing requirements between the separation systems. An existing sealing system between the separation systems usually forms sealing by means of pressure difference due to a pressure inside the cleaning apparatus being greater than a pressure of the external atmosphere during operation. However, such sealing depends on the uncertain pressure difference, or large-particle garbage may obstruct an operation of a sealing element between separation stages, such that the sealing performance cannot be ensured, thereby adversely affecting the separation efficiency.

It should be noted that the information disclosed in the above section is only for enhancement of understanding of the background of the present invention, and therefore may contain information that does not form the prior art already known to a person skilled in the art.

### SUMMARY

In order to overcome shortcomings of the prior art described above, an object of the present invention is to provide a cleaning apparatus. The cleaning apparatus includes:
a suction system configured to generate a suction force for sucking dirty air into the cleaning apparatus;
a separation system configured to separate garbage in the dirty air, wherein the separation system includes at least a primary separation system and a secondary separation system;
a filtering system configured to further filter air passing through the separation system; and
a garbage collection system, wherein the garbage collection system includes at least a first garbage collection cavity configured to collect the garbage passing through the primary separation system and a second garbage collection cavity configured to collect the garbage passing through the secondary separation system; wherein the secondary separation system includes a secondary cyclone separator, and the secondary cyclone separator includes: at least one cyclone pipe configured to separate the dirty air; an airflow inlet configured to provide an inlet allowing an airflow to enter the secondary cyclone separator; an overflow pipe configured to discharge the airflow from the secondary cyclone separator; a front filter screen disposed perpendicular to the overflow pipe and configured to filter the airflow discharged from the overflow pipe; and a front filter screen cover configured to fix the front filter screen in a front filter screen mounting groove.

In some embodiments, the front filter screen includes a handle for holding the front filter screen, to take the front filter screen out from the front filter screen mounting groove.

In some embodiments, the front filter screen cover is disposed on the secondary cyclone separator through a pivoting part disposed at one end of a diameter of the front filter screen cover, and the pivoting part is configured to provide a rotary shaft for the front filter screen cover in an open state or a closed state.

In some embodiments, the front filter screen cover further includes an operation part disposed at the other end of the diameter of the front filter screen cover, and the operation part is configured to be used to open or close the front filter screen cover.

In some embodiments, a rib is disposed on the front filter screen cover, and the rib is configured to facilitate effective fixing of the front filter screen without affecting the airflow passing through the front filter screen.

In some embodiments, the front filter screen is of a circular structure, and includes a multi-layer filter screen in the middle, and a peripheral portion fixing the multi-layer filter screen.

In some embodiments, the front filter screen cover includes a hollowed-out portion or a hollow portion, and an outer ring surrounding the hollowed-out portion or the hollow portion, and when the front filter screen cover is in a closed state, the outer ring is abutted against the peripheral portion of the front filter screen.

In some embodiments, an area of the hollowed-out portion or the hollow portion is greater than or equal to an area of the multi-layer filter screen.

In some embodiments, an interior of the cyclone pipe is in a tapered shape, and the secondary cyclone separator further includes:
an air inlet tangentially disposed at an upper portion of the cyclone pipe;
an outlet located at an end of a lower portion of the cyclone pipe,
wherein the cyclone pipe includes peripheral cyclone pipes arranged circumferentially; and
a baffle plate extending outward between adjacent peripheral cyclone pipes along a direction away from the cyclone pipe, and being substantially tangent to one of every two adjacent peripheral cyclone pipes.

In some embodiments, the cleaning apparatus further includes one or more central cyclone pipes, wherein the peripheral cyclone pipes are disposed around the central cyclone pipe.

In some embodiments, an airflow direction at the air inlet is substantially perpendicular to the baffle plate.

In some embodiments, an outer partition plate is further disposed between adjacent peripheral cyclone pipes, and the outer partition plate is connected to two adjacent peripheral cyclone pipes.

In some embodiments, an inner partition plate is disposed between one or more central cyclone pipes and one or more peripheral cyclone pipes adjacent to the one or more central cyclone pipes.

In some embodiments, a height at which a bottom of the inner partition plate is located is the same as a height at which a bottom of the baffle plate close to the cyclone pipe is located, and is lower than a height at which a bottom of the outer partition plate is located.

In some embodiments, exteriors of the cyclone pipes corresponding to a position where the bottom of the inner partition plate and the bottom of the baffle plate are at the same height cooperate with an airflow isolation plate to form sealing of the airflow.

According to some embodiments of the present invention, a front filter screen is disposed at the downstream of the overflow pipe, and the airflow discharged from the overflow pipe is preferably able to perpendicularly pass through the front filter screen so as to improve the suction efficiency of the cleaning apparatus.

It should be understood that the foregoing general description and the following detailed description are only exemplary and explanatory, and do not limit the scope of the present invention.

### BRIEF DESCRIPTION OF THE DRAWINGS

The drawings incorporated in the specification and forming a part of the specification illustrate embodiments consistent with the present invention and serve together with the specification to explain the principles of the present invention. Apparently, the drawings in the description below are merely for illustrating some embodiments of the present invention, and other drawings can be obtained by those of ordinary skill in the art according to these drawings without creative efforts.
FIG. 1 is a schematic diagram of a cleaning apparatus according to an embodiment of the present invention;
FIG. 2 is a schematic diagram of a separation system and a sealing system of a cleaning apparatus according to an embodiment of the present invention;
FIG. 3 is a cross-sectional view of a cleaning apparatus according to an embodiment of the present invention;
FIG. 4 is a cross-sectional view of a separator in a first state according to an embodiment of the present invention;
FIG. 5 is a cross-sectional view of a separator in a second state according to an embodiment of the present invention;
FIG. 6 is a top view of a separator in a first state according to an embodiment of the present invention;
FIG. 7 is a top view of a secondary cyclone separator according to an embodiment of the present invention;
FIG. 8 is a front view of a secondary cyclone separator according to an embodiment of the present invention;
FIG. 9 is a first bottom perspective view of a secondary cyclone separator according to an embodiment of the present invention;
FIG. 10 is a second bottom perspective view of a secondary cyclone separator according to an embodiment of the present invention;
FIG. 11 is a cross-sectional view of a secondary cyclone separator according to an embodiment of the present invention;
FIG. 12 is a front view of a cleaning apparatus according to an embodiment of the present invention;
FIG. 13 is a perspective view of a cleaning apparatus at a view angle according to an embodiment of the present invention;
FIG. 14 is a perspective view of a cleaning apparatus at another view angle according to an embodiment of the present invention;
FIG. 15 is a front view of a cleaning apparatus mounted with a cleaning head according to an embodiment of the present invention; and
FIG. 16 is a front view of a cleaning apparatus with a dust bucket cover being opened according to an embodiment of the present invention.

### List of reference numerals:

1. first wall; 2. airtight cover; 3. tapered cavity wall; 4. secondary separation system; 5. filter screen; 6. sealing element outer wing; 7. in-groove isolation body; 8. sealing element; 9. groove wall; 10. protrusion; 11. sealing element inner wing; 12. suction inlet; 13. second wall; 14. second collection cavity; 15. pivot; 16. first collection cavity;
A1. secondary cyclone separator; A2. airflow inlet; A3. overflow pipe; A4. front filter screen; A5. front filter screen cover; A6. blower; A7. rear filter screen; A8. dust bucket; A9. pivoting part; A10. rib; A11. front filter screen cover groove; A12. operation part;
B1. cyclone pipe; B2. baffle plate; B21. first baffle plate; B22. second baffle plate; B23. third baffle plate; B3. air inlet; B41. first airflow inlet; B5. positioning structure; B. lower portion of cyclone pipe; B61. first cyclone pipe; B62. second cyclone pipe; B63. third cyclone pipe; B7. inner partition plate; B71. first inner partition plate; B72. second inner partition plate; B8. outer partition plate; B81. first outer partition plate; B82. second outer partition plate; B11. metal filter screen; B12. airflow isolation plate;
A8. dust bucket; C3. dust bucket cover; C3a. dust bucket cover in open state; 12. suction inlet; C5. air outlet; C6. handle; C7. battery; C8. sliding knob for opening cover; C8a. sliding knob in pressed state; C9. sliding knob for detaching bucket; C10. buckle; C11. charging elastic sheet; C12. DC socket; C13. lock catch; C14. trigger; C15. cleaning head.

### DETAILED DESCRIPTION

To make the objects, technical solutions and advantages of the present invention clearer, the present invention will be further described in detail below with reference to the drawings. It is apparent that the described embodiments are only a part of embodiments of the present invention, not all embodiments of the present invention. All other embodiments obtained by those of ordinary skill in the art based on embodiments in the present invention without creative efforts are within the protection scope of the present invention.

The terms used in embodiments of the present invention are only for the purpose of describing particular embodiments, and are not intended to limit the present invention. The singular forms "a/an", "said" and "the" used in embodiments of the present invention and the appended claims are intended to include the plural forms as well, unless otherwise clearly indicated in the context. The term "a plurality of" generally includes at least two.

It should be understood that, although the terms "first", "second", "third", etc. may be used for description in embodiments of the present invention and should not limit the descriptions. These terms are only used to distinguish items for description. For example, "first" may also be referred to as "second" without departing from the scope of the embodiments of the present invention. Similarly, "second" may also be referred to as "first".

It should also be noted that, the terms "including/comprising", "containing", or any other variants are intended to cover the nonexclusive inclusion, such that a commodity or device including a series of elements includes not only the elements listed, but also other elements not listed explicitly or elements inherent to such a commodity or device. Without more limitations, the element defined by the phrase "including a ..." does not exclude the existence of other same elements in the commodity or device including the element.

Embodiments of the present invention are described in detail below with reference to the drawings.

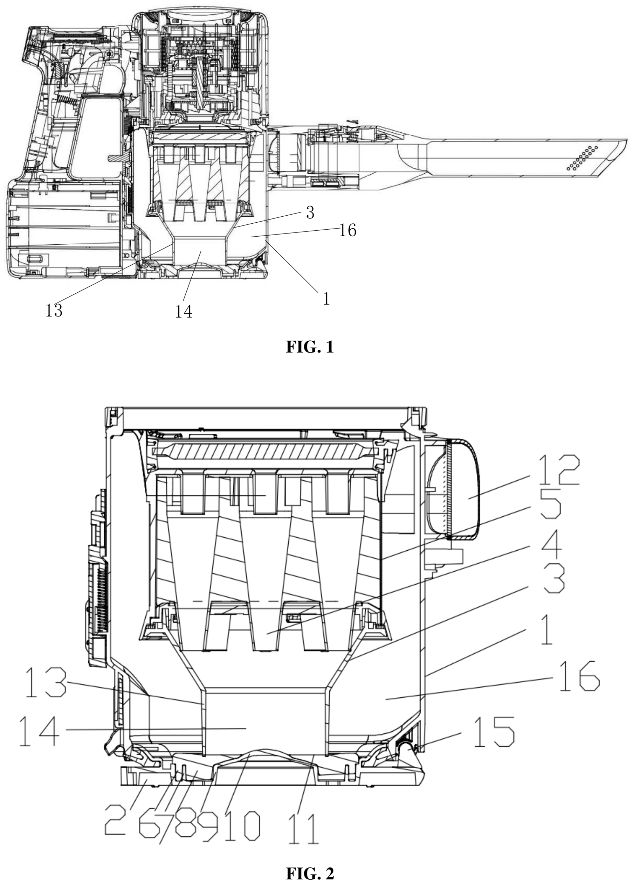

As shown in FIGs. 1 to 3 and FIG. 12, a cleaning apparatus includes a handle, a battery, a main body, a suction system, a dust bucket, a separation system, a suction inlet 12, and the like. The battery supplies power for the suction system to generate a suction force. Dirty air enters the separation system from the suction inlet 12 for primary separation, and generated garbage falls into a first collection cavity 16. The dirty air then enters a secondary separation system from a filter screen 5 for further separation, and generated garbage falls into a second collection cavity 14. The garbage generated after the primary separation and the secondary separation falls into the bottom of a dust bucket A8. The airflow passes through the filtering system from a top of a secondary separation stage to flow to a motor of the suction system to be filtered again, and the clean air is then discharged to the outside of the cleaning apparatus through an air outlet C5.

The primary separation is performed on the dirty air, which enters the cleaning apparatus from the suction inlet 12, along a tangential direction of a first wall 1. Large-particle garbage is thrown to the first wall 1 by a cyclone and falls into the first collection cavity 16. The first collection cavity 16 has a circular space jointly formed by a lower portion of the first wall 1, an outer side of a tapered cavity wall 3 of the secondary separation stage and a second wall 13 of secondary separation stage. A skirt portion is formed on an upper portion of the tapered cavity wall 3. These structures prevent jointly dirt entering the first collection cavity 16 from being brought up upwards again.

After the primary separation, the large-particle garbage falls into the first collection cavity 16, and some other garbage such as hair and fluff is isolated outside the filter screen 5 along with the airflow under the action of the suction force. The airflow passing through the filter screen 5 is guided by a baffle plate/a partition plate in the secondary separation stage to enter an air inlet on an upper portion of a taper pipe of the secondary separation system 4 for the secondary separation through a plurality of taper pipes. The separated fine-particle garbage falls into the second collection cavity 14 from a bottom opening of each taper pipe, and the air flows to the filtering system from an overflow pipe on the upper portion of the taper pipe.

The first collection cavity 16 and the second collection cavity 14 described above have a common bottom, and the bottom is formed by an airtight cover 2 pivotably connected to the first wall 1. The airtight cover 2 is connected to the first wall 1 through a pivot 15. The airtight cover 2 is of a substantially circular structure matched with the cylindrical first wall 1. A pivoting system is provided at respective positions of the first wall 1 and the airtight cover 2. One end of the airtight cover 2 can be rotated around the pivoting system, and the other end of the airtight cover 2 thus goes away from/close to the first wall 1, thereby forming a first position where the airtight cover 2 is in a closed state and a second position where the airtight cover 2 is in an open state, relative to the first wall 1. When the airtight cover 2 is located at the first position, i.e., in the closed state, a locking structure between the airtight cover 2 and the first wall 1 is in a locked state at the other ends of the airtight cover 2 and the first wall 1 away from the pivoting system.

A protrusion 10 formed toward a separation cavity is located at the center of the airtight cover 2. A maximum outer diameter of the protrusion 10 is smaller than an inner diameter of a second wall 13 of the secondary separation stage. An annular inner groove and an annular outer groove are formed outward from the maximum outer diameter of the protrusion 10, and a width of the annular inner groove is greater than a width of the annular outer groove. An in-groove isolation body protruding toward the separation cavity is formed between the annular inner groove and the annular outer groove. The annular inner groove has a groove wall 9.

An integral sealing element is filled in the annular inner groove and the annular outer groove, and is higher than the in-groove isolation body 7. It can be understood that, the integral sealing element is integrally formed, and completely covers the annular inner groove and the annular outer groove in the separation cavity. The integral sealing element extends from the groove wall 9 of the annular inner groove/the maximum outer diameter of the protrusion 10 to a center of the protrusion 10 to cover at least part of the protrusion 10. As a result, an approximately smooth transition is formed between a top of the integral sealing element and an upper wall of the protrusion 10. Such disposal is advantageous in that, it is convenient to remove the garbage falling into the second collection cavity 14, no obvious partition would be formed, so that the garbage can move into the annular inner groove along the integral sealing element and the upper wall of the protrusion 10.

As shown in FIG. 2, a sealing element outer wing 6 is filled in the annular outer groove, a sealing element 8 is filled in the annular inner groove, and a sealing element inner wing 11 extends from a top of the protrusion 10 to the center of the protrusion 10. The sealing element outer wing 6, the sealing element 8, and the sealing element inner wing 11 jointly form the integral sealing element located on an inner side of the airtight cover 2. The integral sealing element may be taken down from the airtight cover 2 for cleaning, or an adhesive may be applied to a bottom of the integral sealing element to adhere the integral sealing element with the airtight cover 2 so as to form a non-detachable structure.

When the airtight cover 2 is in the closed state, i.e., at the first position, the second wall 13 can form interference with the airtight cover 2 in size. In other words, when the airtight cover 2 is changed from the open state to the closed state, that is, when the airtight cover 2 moves from the second position to the first position, the second wall 13 will firstly contact with the sealing element 8 on the airtight cover 2 from a position away from the pivot 15; as the airtight cover 2 continues to move, the second wall 13 will compress the sealing element 8 until the airtight cover 2 is completely closed and forms a locked state. As a result, the second wall 13 and the sealing element 8 achieve the balanced compression sealing. The sealing element 8 may deform in the compression sealing process, thus in order to reduce an impact of deformation on the sealing performance, a main deformation region is disposed on the sealing element 8. Deformation interference is formed between the sealing element 8 and two side walls of the annular inner groove, namely, the groove wall 9 and the in-groove isolation body 7, so that the deformation of the sealing element 8 can be limited in the space of the annular inner groove. The in-groove isolation body 7 and the protrusion 10 prevent severe deformation of the sealing element outer wing 6 connected to the top of the sealing element 8 and the sealing element inner wing 11 caused by the deformation of the sealing element 8. As a result, the integral sealing element is still well attached to the airtight cover 2 at an outer side of the sealing element outer wing 6 and an inner side of the sealing element inner wing 11, thereby preventing the garbage in the first collection cavity 16 from entering the outer groove from a gap between the sealing element outer wing 6 and the airtight cover 2, and preventing the garbage in the second collection cavity 14 from entering the inner groove from a gap between the protrusion 10 and the sealing element inner wing 11.

The protrusion 10 extends into the separation cavity by a distance, and the highest point of the protrusion 10 is higher than the top of the integral sealing element, which is not necessary. It can be understood that, regardless to which height the protrusion 10 reaches when protruding upwards, sealing requirements can be satisfied as long as the compression interference between the second wall 13 and the sealing element 8 can be formed when the airtight cover 2 is completely closed so that the sealing is formed. In embodiments of the present invention, the top of the integral sealing element is not a complete circle, but is in a circular shape. This is mainly because there will be excess air in a space between the bottom of the integral sealing element and the top of the airtight cover 2 in the process of closing the airtight cover 2, such that the air in the airtight cover 2 cannot be discharged when the airtight cover 2 is closed, thereby adversely affecting the sealing performance of the integral sealing element.

The integral sealing element is formed by filling soft solid rubber in the inner groove and the outer groove. When the integral sealing element is used, if a compression interference distance between the second wall 13 and the sealing element 8 is too small, the sealing may be insufficient due to the garbage particles or other debris at the top of the sealing element 8; if the compression interference distance is too large, the airtight cover 2 will be difficult to close. Therefore, a height of the sealing element 8 and an interference size between the second wall and the sealing element 8 may be set appropriately according to the characteristics of the sealing element 8 while reasonably considering the sealing performance and the convenient operation. In some embodiments, the interference distance may be preferably set to 1 to 5 mm, which can avoid the sealing in an abnormal case and facilitate the operation of a user without affecting the service life of the pivot 15.

The integral sealing element is rubber with certain hardness, and the hardness of the second wall 13 is at least higher than that of the sealing element 8. Such disposal is obviously advantageous in that, the second wall 13 with higher hardness can exert a larger compression pressure on the sealing element 8 to overcome a resilience force of the rubber sealing element, such that stable deformation can be formed at each position where the second wall 13 is in contact with the sealing element 8, thereby forming the uniform sealing.

In this way, when the cleaning apparatus is running, there is no airflow leaking formed between the second wall 13 and the sealing element 8, and the air exiting from the primary separation system only flows to the secondary separation system 4 through the filter screen 5, such that a flowing direction of the air is more stable, further improving the suction power and the separation efficiency.

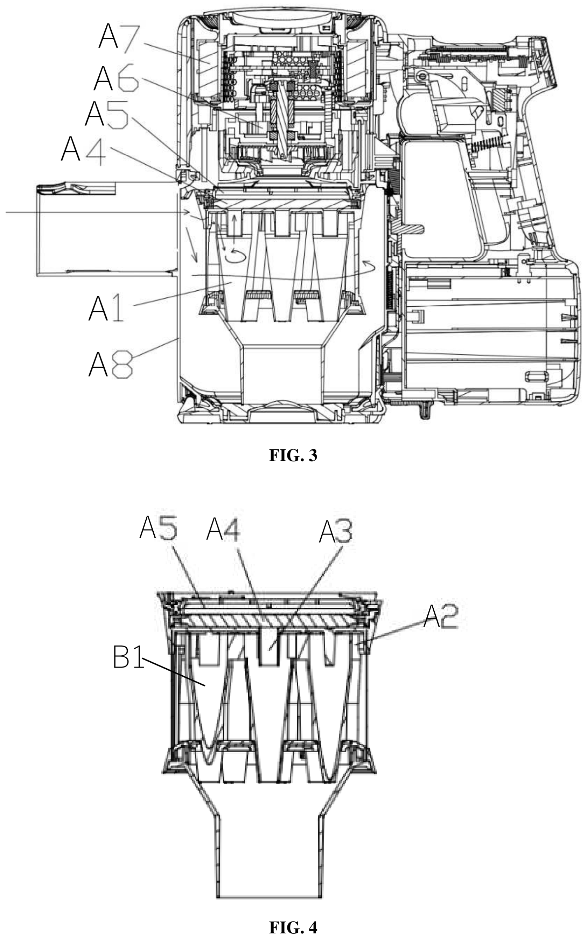

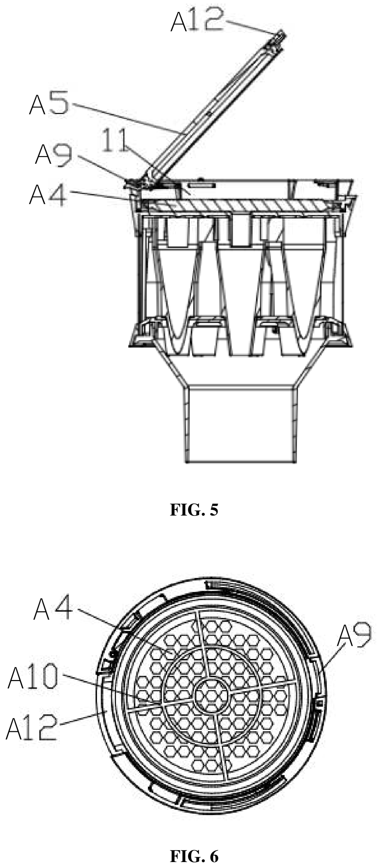

As shown in FIGs. 3 to 6, the secondary separation system 4 includes a secondary cyclone separator A1 for further separating the dirty air separated by the previous separator. The large-particle garbage in the previous separator is separated and collected in a dust bucket A8, and the dirty air enters the secondary cyclone separator A1 through an airflow inlet A2. The secondary cyclone separator A1 includes a plurality of cyclone pipes B1 disposed in parallel, each cyclone pipe B1 includes one or more airflow inlets A2, and the airflow enters the cyclone pipe B1 from the airflow inlet A2 along a tangential direction of an upper portion of the cyclone pipe B1 to form a cyclone inside each cyclone pipe B1. The fine-particle garbage is thrown to an inner wall of the taper pipe and falls into the dust bucket for collection from an outlet at the bottom of the cyclone pipe B1 under the action of gravity, and the separated clean air is discharged from an overflow pipe A3 disposed in the upper portion of the cyclone pipe B1. The overflow pipe A3 is a cylindrical pipe having a diameter smaller than a top diameter of the cyclone pipe B1 and a length greater than a depth of the airflow inlet A2, thereby forming an effective cyclone rather than a turbulent flow when the airflow enters the cyclone pipe B1 from the airflow inlet A2.

For a general cleaning apparatus, the clean air directly enters a blower and a motor after being discharged from the overflow pipe A3 of the cyclone pipe B1, thus it is required to further filter the clean air to prevent tiny-particle dust from damaging the blower or the motor.

According to some embodiments of the present invention, a front filter screen A4 is disposed at the downstream of the overflow pipe A3, and the airflow discharged from the overflow pipe A3 is preferably able to perpendicularly pass through the front filter screen A4 so as to improve the suction efficiency of the cleaning apparatus.

In some embodiments, a filter screen mounting groove is disposed at an outlet of the secondary cyclone separator A1, and the front filter screen A4 is matched in shape with the filter screen mounting groove. In some embodiments, the front filter screen A4 and the filter screen mounting groove are both in a cylindrical shape. In order to achieve a better filtering effect, the front filter screen A4 adopts a multi-layer material. Layers of the multi-layer material are arranged in stack, and edges of the multiple layers of materials form a circular entirety by stitching. Optionally, the multi-layer materials are stacked, and then fixed by a flexible or hard material at the periphery of the front filter screen A4. When the flexible edge is used, the entire front filter screen A4 may be distorted during washing, which is more convenient for the user to wash the front filter screen in a rubbing manner or squeeze water therein. When the hard material is used, deformation of the front filter screen may be avoided, but good sealing cannot be formed after the front filter screen A4 is mounted. Which method is to be adopted may be determined according to actual situations, and only some embodiments are provided herein. In order to help the user to take down the front filter screen A4, a handle may be disposed at the periphery of the front filter screen A4. Further, the handle may also serve as a positioning structure for positioning during mounting. It can be understood that the positioning structure may also be in a separate structure such as a common protrusion, a groove, or the like.

In order to enable the front filter screen A4 and the secondary cyclone separator A1 to be integrated, the front filter screen A4 may be fixed to the secondary cyclone separator A1 through an additional front filter screen cover A5. The front filter screen cover A5 may be connected to the secondary cyclone separator A1 through a buckle. In such case, it is required to take down front filter screen cover A5 before the front filter screen A4 is taken down. Since the front filter screen cover A5 is a completely separate structure, the user may forget to mount the front filter screen cover A5 in the subsequent mounting process, such that the technical effect described above cannot be achieved. In some embodiments, an anti-neglected-mounting structure may be adopted to remind the user that the front filter screen cover A5 has not been mounted yet. In some other embodiments, the front filter screen cover A5 may be disposed in a non-complete separation manner. A pivoting part A9 and an operation part A12 are respectively disposed at two ends of a diameter of the front filter screen cover A5. The pivoting part A9 is used for allowing the user to activate or deactivate the pivoting of the front filter screen cover A5. The operation part A12 may be a separate structure, or may be the front filter screen itself, which is not limited herein. When the user operates to open the front filter screen cover A5, a limiting structure may be disposed to limit an opening angle. The angle described herein is used to help the user to take out the front filter screen A4 from a front filter screen mounting groove conveniently after the front filter screen cover A5 is opened.

After the front filter screen A4 is taken down and is cleaned, the user may also forget to mount the front filter screen A4 again, resulting in a potential damage to the cleaning apparatus. Therefore, it is very necessary to define anti-neglected-mounting of the front filter screen A4. There are various methods for preventing neglected mounting. In some embodiments, when an installation of the front filter screen A4 has not been completed, the front filter screen cover A5 cannot be closed or the separator cannot be mounted on the cleaning apparatus again. Specific ways to realize the anti-neglected-mounting is not limited in the present invention.

A common goal to be pursued for the cleaning apparatus is the minimum power loss of the blower. Thus, on the one hand, the front filter screen A4 may be designed to be perpendicular to the overflow pipe A3 to obtain the best passing efficiency; on the other hand, an area of the filter screen should cover all overflow pipes A3 to effectively filter the airflow discharged from the overflow pipe A3. Meanwhile, the passing efficiency of the airflow passing through the front filter screen A4 before entering the blower also needs to be ensured. In order to achieve this purpose, the front filter screen cover A5 is disposed in such a way that influence on the flowing direction of the airflow should be as little as possible, and it is better to ensure that the airflow passing through the front filter screen A4 is not or less affected by other structures but directly flows to the blower. However, in order to fix the front filter screen A4 to the filter screen mounting groove through the front filter screen cover A5, the front filter screen cover A5 may be designed to be a hollow annular structure that can completely abut against a non-filtering edge of the front filter screen A4. That is, the annular structure does not interfere with a filtering part of the front filter screen A4 in structure or in airflow, which is the best manner. However, the front filter screen A4 is stacked by a plurality of flexible filtering layers, thus when the blower is on, the flexible filtering layers inevitably deform, move away from the overflow pipe A3 as a whole and tend to shift toward the inlet of the blower. Therefore, it is necessary to design some small ribs A10 on the front filter screen cover A5 to form a hollowed-out structure, so as to limit above shift tendency. It can be understood that, when the ribs A10 are few and very thin, influence of the ribs on the overall flowing direction of the airflow should be in a controllable or acceptable range. Therefore, the shift tendency of the front filter screen A4 can still be restricted even when the suction power of the blower is increased or the cleaning apparatus is blocked.

After the airflow passes through a filtering region of the front filter screen A4, if a periphery of the front filter screen cover A5 is partially or all located in the filtering region, the penetrability of the airflow will be obviously influenced. In order to minimize the reduction of the suction power caused by such influence, an area of a hollowed-out portion or a hollow portion of the front filter screen cover A5 is greater than or equal to an area of the filtering region of the front filter screen A4. In this way, after the airflow passes through the front filter screen A4, reduction of the suction power due to mismatch with the operation power of the blower will not happened, the mismatch being caused by decreasing of the volume of the airflow passing through per unit time or sudden reduction of the speed of the airflow in a case where the area of a flow channel of the front filter screen cover A5 is reduced.

As described above, the periphery of the front filter screen A4 may be in various forms. When the periphery is stitched or flexible, the front filter screen A4 will shift more or less due to the operation of the blower, which adversely affects the sealing performance of the entire airflow channel. Therefore, another function of the front filter screen cover A5 is to tightly press the periphery of the front filter screen A4 through the periphery of the front filter screen cover A5 itself, so as to minimize the possibility of occurrence of the deformation mentioned above. The periphery of the front filter screen cover A5 needs to be pressed against the periphery of the front filter screen A4 in an interference manner when the front filter screen cover A5 is closed. In a case where the periphery of the front filter screen A4 is made of a hard material, appropriate pression in an interference manner is also necessary. As a result, the possibility of deformation of the front filter screen A4 is reduced, and the effective sealing of the entire airflow channel is formed at the front filter screen A4.

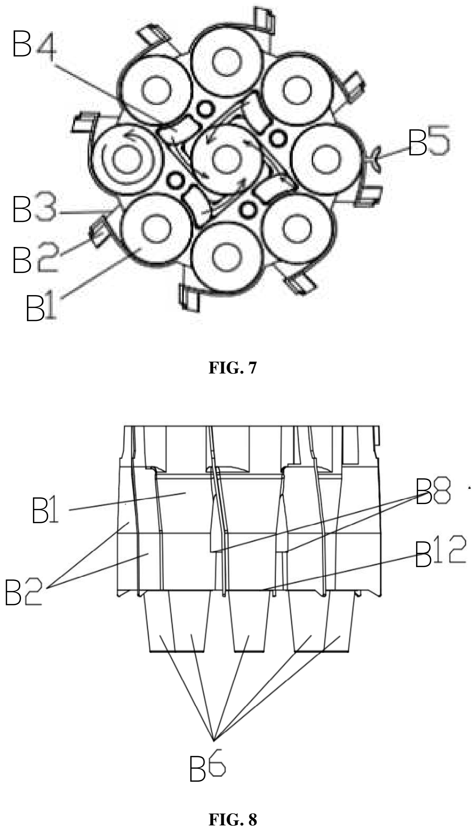

The secondary separator A1 provided by embodiments of the present invention is shown in FIGs. 7 to 9. The cyclone pipe B1 is as a whole in a tapered shape. In some embodiments, an inner space of the cyclone pipe B1 is in a smooth conical shape, such that the airflow entering the cyclone pipe B1 can form an effective cyclone to separate dust particles under the action of a centrifugal force. An air inlet B3 of the cyclone pipe B1 is disposed on a side surface of the upper portion of each cyclone pipe B1, the airflow enters in a tangential direction, and an outlet of the cyclone pipe B1 is disposed at an end of the lower portion B6 of each cyclone pipe, such that the dust particles separated centrifugally can be discharged from the outlet under the action of its own gravity and/or under the action of a downward component of a centrifugal force. On the basis of the secondary cyclone separator A1, a cover connected to the upper portion of the cyclone pipe B1 of the secondary cyclone separator A1 is further included, and an overflow pipe A3 is disposed on the cover, and the number of the overflow pipe A3 equals to the number of the cyclone pipe B1. Each overflow pipe A3 extends into the cyclone pipe B1 from a center of a top of the cyclone pipe B1. A central axis of the overflow pipe A3 is coaxial with a central axis of the corresponding cyclone pipe B1. A height of the overflow pipe A3 is greater than a depth of the air inlet B3. As a result, an effective cyclone rather than a turbulent flow can be formed after the airflow enters the cyclone pipe B1 from the air inlet B3.

There is a plurality of cyclone pipes B1, which may be divided into one or more groups. A case where two groups is included will be described in detail below.

The cyclone pipes B1 are divided into two groups. The first group is defined as a group of peripheral cyclone pipes that are distributed at the same angle as an overall central axis of the cyclone separator A1. It can be understood that, a central axis of each cyclone pipe in the first cyclone pipe group may obliquely intersect with or be parallel to or be skew (neither intersecting nor parallel) to the overall central axis. Air inlets B3 of each peripheral cyclone pipe group are all symmetrically disposed at corresponding positions, and are all located outside. The second group is defined as an inner cyclone pipe group, which may be one or more cyclone pipes. One cyclone pipe is taken as an example herein. The inner cyclone pipe may be referred to as a central cyclone pipe, an axis of the central cyclone pipe is the same as the overall central axis of the secondary cyclone separator A1. The central cyclone pipe may have a plurality of air inlets B3. It can be understood that, the air inlets B3 may be disposed symmetrically, and the number the air inlets of the central cyclone pipe may be a half, one fourth, etc., of the number of that of the peripheral cyclone pipe groups. Such disposal is mainly used to ensure the airflow entering the central cyclone to be balanced at each air inlet B3, and also to realize effective cyclone.

A baffle plate B2 is provided on each peripheral cyclone pipe, and the baffle plate B2 extends outward between every two adjacent peripheral cyclone pipes along a direction away from the cyclone pipe, or extends outward in a tangential direction of two adjacent cyclone pipes and in a substantially radial direction of the entire secondary cyclone separator A1. Alternatively, only one single peripheral cyclone pipe is included in a space formed by every two baffle plates B2. That is, outer rings of all baffle plates B2 as a whole form a circle, and a diameter of the circle is greater than a diameter of a circle formed by outermost sides of all peripheral cyclone pipes. In some embodiments, the baffle plates B2 are totally formed outside the single cyclone pipe B1, and are successively arranged in a tangential direction of any point from top to bottom of the cyclone pipe B1. That is, a shape of the baffle plate B2 corresponds to an external shape of the cyclone pipe B1. In this way, the air inlet B3 of the peripheral cyclone pipe can be formed in a plane where the baffle plate B2 is located. The plane is an irregular cambered surface rather than a planar configuration, and the direction of the airflow at each point of the air inlet is basically perpendicular to the baffle plate B2.

An outer partition plate B8 substantially disposed along a circumferential direction is provided between every two adjacent peripheral cyclone pipes. Since the external shape of each cyclone pipe B1 is substantially tapered, when the upper portion of each peripheral cyclone pipe B1 is substantially closely arranged, a large or small gap will be reserved below each peripheral cyclone pipe B1. The outer partition plate B8 is provided to some extent to block the corresponding gap. In some embodiments, no outer partition plate B8 may be provided.

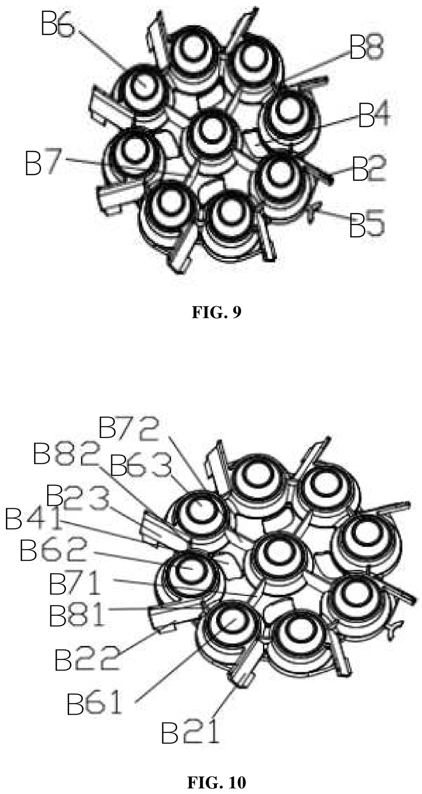

FIG. 10 illustrates an example in which the corresponding number of cyclone pipes B1 is defined as described above. The peripheral cyclone pipe includes eight single cyclone pipes, and there is one central cyclone pipe. Based on this, the number of air inlets B3 of the central cyclone pipe described above may be disposed to be a half of the number of peripheral cyclone pipes. That is, the central cyclone pipe has four symmetrical air inlets, and each air inlet corresponds to one airflow channel. In some embodiments, four inner partition plates B7 are disposed at the outer side of the central cyclone pipe, one end of each of the four inner partition plates B7 is abutted against the outer side of the above central cyclone pipe, and the other end thereof is abutted against the outer side of the spaced peripheral cyclone pipe. As shown in FIG. 4, a complete part is taken as an example. A first inner partition plate B71 and a second inner partition plate B72 are disposed on the central cyclone pipe. The other end of the first inner partition plate B71 is abutted against a first cyclone pipe B61, and the other end of the second inner partition plate B72 is abutted against a third cyclone pipe B63. The first cyclone pipe B61 and the third cyclone pipe B63 are partitioned by a second cyclone pipe B62. A first outer partition plate B81 located between the first cyclone pipe B61 and the second cyclone pipe B62 and a second outer partition plate B82 located between the second cyclone pipe B62 and the third cyclone pipe B63 are also disposed on the central cyclone pipe. In this way, a space is formed, which is enclosed by part of an outer wall of the central cyclone pipe, the first inner partition plate B71, part of an outer wall of the first cyclone pipe B61, the first outer partition plate B81, part of an outer wall of the second cyclone pipe B62, the second outer partition plate B82, part of an outer wall of the third cyclone pipe B63 and the second inner partition plate B72, to form an airflow channel. The airflow channel provides an airflow path in which the airflow passes through a first airflow inlet B41 and then enters an air inlet of the central cyclone pipe to form a cyclone.

The airflow channel of the central cyclone pipe is described above. An airflow channel of the peripheral cyclone pipe will be described in detail below, reference is made to FIG. 10. For example, a channel in which the airflow enters an air inlet of the first cyclone pipe B61 is formed by a first baffle plate B21, part of the outer wall of the first cyclone pipe B61, the first outer partition plate B81 and a second baffle plate B22. A channel in which the airflow enters an air inlet of the second cyclone pipe B62 is formed by the second baffle plate B22, part of the outer wall of the second cyclone pipe B62, the second outer partition plate B82 and a third baffle plate B23, and the like. It can be seen that, the channel for the airflow entering each single cyclone pipe B1 only includes part of the outer wall of the single cyclone pipe B1, but does not include the outer wall of any other cyclone pipe B1 other than the single cyclone pipe B1.

In some embodiments, in order to form the above airflow channel to which the air flows, there are general requirements for the size for constructing each airflow channel. Referring to FIG. 8, each baffle plate B2 extends downward from the top of the cyclone pipe B1 of the secondary cyclone separator A1 without exceeding an opening at the bottom end of the cyclone pipe. That is, the height of the baffle plate B2 is as a whole smaller than that of the cyclone pipe. A particular position (which is located above the bottom opening) at the lower portion of the cyclone pipe B1 may be matched with an airflow isolation plate B12, that is, a diameter of the particular position of the cyclone pipe B1 is equal to an inner diameter of an opening on the airflow isolation plate B12. In some embodiments, a plurality of openings are disposed on the airflow isolation plates B12, and the number of the openings disposed is equal to that of cyclone pipes on the secondary cyclone separator A1 for matching mounting. In some embodiments, an isolation structure may also be disposed on the cyclone pipe at a matching position, such that the cyclone pipe 1 and the airflow isolation plate B12 can be better sealed up after the airflow isolation plate B12 is mounted. Combined with the airflow isolation plate B12, the bottom height of the baffle plate B2 close to the cyclone pipe is the same as a height of the matched airflow isolation plate B12 on the cyclone pipe B1, or the overall bottom height of the baffle plate B2 is the same as the height of the matched airflow isolation plate B12 on the cyclone pipe B1. Meanwhile, the bottom height of the inner partition plate B7 is also the same as the height of the matched airflow isolation plate B12 on the cyclone pipe B1. However, the bottom height of the outer partition plate B8 is different from the height described above, and there is a gap between the bottom of the outer partition plate B8 and the airflow isolation plate B12.

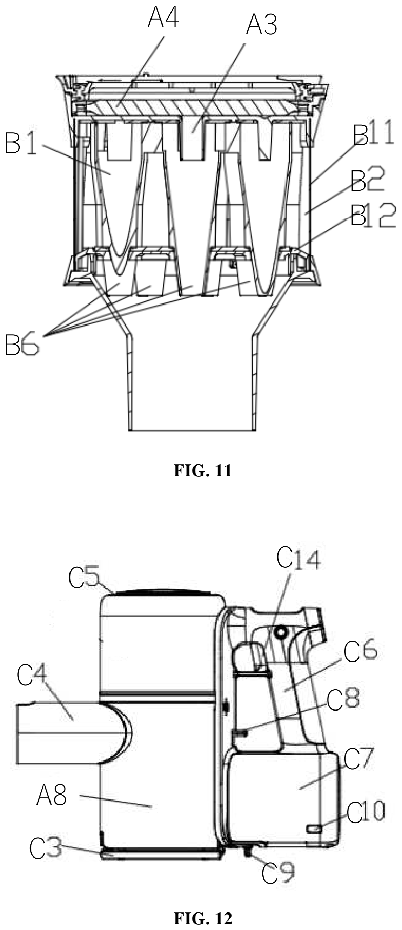

In this way, after the airflow isolation plate B12 is mounted and the secondary cyclone separator A1 is mounted on the cleaning apparatus, reference may be made to FIG. 11, in which the airflow enters the airflow channel of the peripheral cyclone pipe after passing through a metal filter screen B11. The airflow channel defined by the first baffle plate B21 and the second baffle plate B22 is taken as an example. After the airflow enters the channel, part of the airflow in the airflow channel moves upwards to the air inlet B3 of the first cyclone pipe B61 and enters the first cyclone pipe B61 to form a cyclone. Due to a gap between the first outer partition plate B81 and the airflow isolation plate B12, part of the airflow passes through the above gap and enters the airflow channel of the air inlet of the central cyclone pipe formed by the first inner partition plate B71 and the second inner partition plate B72. In some embodiments, as shown in FIG. 10, part of the airflow in the airflow channel of the peripheral cyclone pipe formed by the second baffle plate B22 and the third baffle plate B23 passes through a gap between the second outer partition plate B82 and the airflow isolation plate B12, and also enters the airflow channel formed by the first inner partition plate B71 and the second inner partition plate B72. The above two streams of airflows passing through a gap between the first outer partition plate B81 and the airflow isolation plate B12 and a gap between the second outer partition plate B82 and the airflow isolation plate B12 join in the airflow channel formed by the first inner partition plate B71 and the second inner partition plate B72, and flow to the first airflow inlet B41 at the upper portion of the central cyclone pipe, and then enter the air inlet of the central cyclone pipe to form a cyclone.

The above process is repeated, such that the entire secondary cyclone separator A1 has the same airflow channels described above, and the airflow has the substantially same flowing direction after entering each airflow channel.

In order to facilitate mounting of the secondary cyclone separator A1, a positioning structure B5 is also disposed on the secondary cyclone separator A1. The positioning structure B5 cooperates with the corresponding structure on a mounting part of the secondary cyclone separator A1 to facilitate positioning and mounting of the secondary cyclone separator A1. It can be understood that, the positioning structure B5 does not affect the performance of the airflow in the airflow channel where the positioning structure B5 is located.

The cleaning apparatus further includes a metal filter screen B11. The above metal filter screen B11 encloses the secondary cyclone separator A1, and the baffle plate B2 of the secondary cyclone separator A1 is abutted against an inner wall of the metal filter screen B11, such that the airflow directly enters the airflow channel of the peripheral cyclone pipe after passing through the metal filter screen, and enters the airflow channel of the central cyclone pipe after passing through the gap between the outer partition plate B8 and the airflow isolation plate 12.

The disposal of the baffle plate B2 on the secondary cyclone separator A1 enables the airflow passing through the metal filter screen B11 to flow only in an outer wall space of a particular single cyclone pipe when entering the particular single cyclone pipe, thereby avoiding the turbulence of the airflow and keeping the airflow in all airflow channels generally consistent. The disposal of the inner and outer partition plates enables the airflow path to be clear and the flowing directions of the airflow to be consistent and stable. The above disposals are of great advantage for improving the separation efficiency of cleaning apparatus.

As shown in FIG. 12, in some embodiments of the present invention, a dust bucket cover C3 is disposed at the bottom of the dust bucket A8. One end of a diameter of the dust bucket cover C3 is mounted at the bottom of the dust bucket A8 through a pivoting structure, and the dust bucket cover C3 may be rotated around the pivoting structure relative to the dust bucket A8, thereby forming two states, i.e., an open state and a closed state of the dust bucket A8. In the open state of the dust bucket A8, an interior of the dust bucket A8 is communicated to the atmosphere, thereby facilitating emptying the garbage separated by the cyclone. In the closed state of the dust bucket A8, a closed space is formed in the interior of the dust bucket A8 to form a negative pressure for a normal operation of the cleaning apparatus, and the garbage separated by the cyclone is collected at the same time. The other end of a diameter of the dust bucket cover C3 is clamped on the dust bucket A8 through a lock catch C13, and the lock match C13 may prevent the dust bucket cover C3 from changing from the closed state to the open state.

The dust bucket A8 is mounted on the cleaning apparatus through a locking structure. When the locking structure is in a locked state, the dust bucket A8 cannot be removed from the cleaning apparatus. When the locking structure is unlocked, the user may remove the dust bucket A8 from the cleaning apparatus for cleaning.

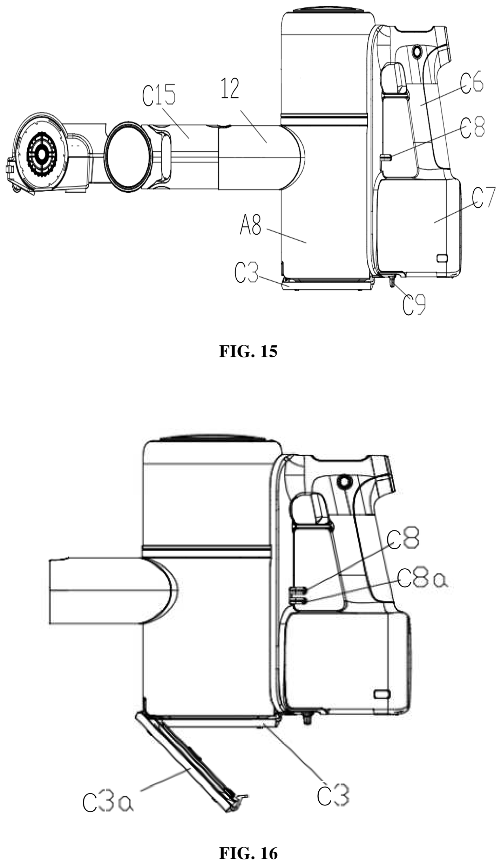

A handle C6 is disposed on the cleaning apparatus, and a battery C7 is disposed below the handle C6. The handle C6 is used for allowing the user to hold. The battery C7 supplies power for the blower and other electronic devices to ensure the operation of the cleaning apparatus. A sliding knob C8 for opening the cover is also disposed in vicinity of the handle C6. The sliding knob C8 is connected to the lock catch C13 through a series of conversion mechanisms. When the user operates the sliding knob C8, the lock catch C13 may be released from an engaged state, such that the dust bucket cover C3 can be unlocked from the locked state and rotated around the pivoting structure under the action of gravity or an external force. That is, the dust bucket cover C3 moves and changes from the closed state to the open state. Specifically, referring to FIG. 16, when the user operates the sliding knob C8, i.e., the user presses the sliding knob C8 and the sliding knob C8 is in a pressed state C8a, the dust bucket cover C3 moves and changes to an open state C3a of the dust bucket cover C3.

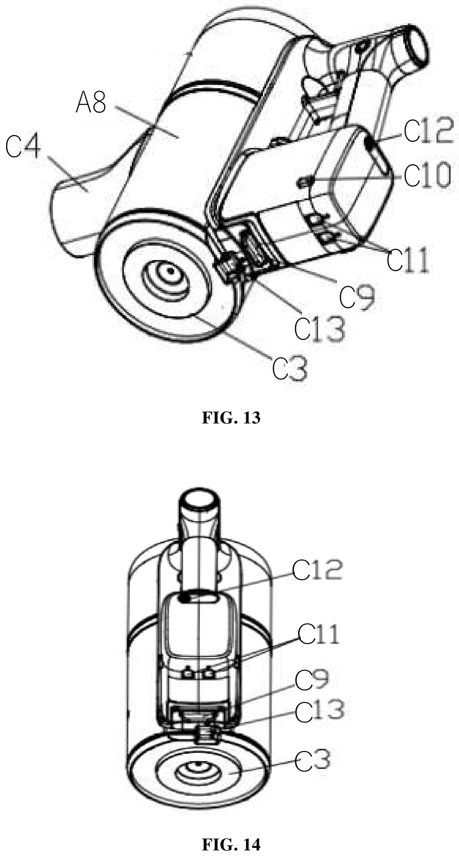

As shown in FIGs. 13 and 14, the battery C7 is in the form of a battery pack, and includes a battery shell and a cell contained in the shell. A charging electrode C11 is disposed at the bottom of the battery shell, and may be matched with a power supply electrode on a base of the cleaning apparatus to charge the battery C7. A DC socket C12 is also disposed on a side of the battery shell, and the battery C7 can be directly charged through a power line by using the DC socket C12. That is, the cleaning apparatus of the present invention includes two charging modes, i.e., an alternating current (the DC socket C12) and a direct current (the charging electrode C11). Specific charging logics are not limited in embodiments of the present invention. Above embodiments only indicate that two charging structures are disposed, but one of the two charging modes is selected to charge the cleaning apparatus during operation. It can be understood that, only one charging structure may also be disposed, and all charging modes are within the scope of embodiments of the present invention. In some embodiments, a buckle C10 may also be disposed on a side wall of the shell of the battery C7 to form a support by matching with clamping slots on a bracket or a hanger when the cleaning apparatus is placed on the bracket or the hanger. Specific forms are not limited in embodiments of the present invention.

A sliding knob C9 for detaching the bucket is also disposed at the bottom of the battery shell of the battery C7, and the sliding knob C9 is mounted through a sliding slot at the bottom of the battery shell. A reset mechanism is disposed for resetting the sliding knob C9 after the sliding knob C9 is operated. The sliding knob C9 is connected to the locking structure through a transmission structure. When the user operates the sliding knob C9, the locking structure is unlocked, and the dust bucket A8 can be removed from the cleaning apparatus. When the user does not operate the sliding knob C9, the sliding knob C9 is reset to an initial position under the action of the reset mechanism.

Referring to FIG. 12 again, a base surface for placing the cleaning apparatus on a supporting surface is formed at the bottom of the dust bucket cover C3. The bottom of the dust bucket cover is of a substantially planar structure to ensure that the cleaning apparatus can stably stand on the supporting surface. The definition of the planar structure herein does not mean that the bottom of the dust bucket cover C3 is a completely plane, but refers to that force receiving surfaces at the bottom of the dust bucket cover C3 are in the same plane.

The base surface at the bottom of the battery C7 may be of a substantially planar or cambered structure or in other irregular shapes, which is not limited herein. In some embodiments, the charging electrode C11 disposed at the bottom of the battery shell of the battery C7 is slightly recessed into a bottom surface of the battery shell. Such design is mainly to avoid contamination of the charging electrode C11. In some embodiments, it is also acceptable that the charging electrode C11 is flush with or protrudes from the bottom surface of the shell. Since the sliding knob C9 is used for allowing the user to conveniently remove the dust bucket A8, it is reasonable that the sliding knob C9 protrudes from the bottom surface of the battery shell of the battery C7. It can be understood that, the protruding size is designed to be the most convenient and laborsaving for the operation of the user. In a design according to above embodiments, the base surface at the bottom of the battery C7 actually includes the lowest point of the battery shell, the lowest point of the sliding knob C9 and the lowest point of the charging electrode C11.

As described above, the bottom surface of the dust bucket cover C3 of the dust bucket A8 forms the supporting surface, such that at least the lowest point of the battery shell on the base surface at the bottom of the battery C7 and the lowest point of the charging electrode C11 should be higher than the bottom surface of the dust bucket cover C3. The most important point is to prevent the charging electrode C11 from being in contact with the supporting surface in any case of placement, so as to keep the charging electrode C11 dry and clean.

The sliding knob C9 actually has a certain width, and the lowest point of the sliding knob C9 may be flush with or higher than the bottom surface of the dust bucket cover C3. It can be understood that, when the lowest point of the sliding knob C9 is flush with the bottom surface of the dust bucket cover C3, they may jointly form a supporting point on the supporting surface, which has an advantage of supporting the cleaning apparatus more firmly. However, when the lowest point of the sliding knob C9 is higher than the bottom surface of the dust bucket cover C3, particularly when a gravity center of the cleaning apparatus as a whole (excluding a cleaning head C15) is located above the dust bucket cover C3, the supporting stability of the cleaning apparatus will not be affected. After the cleaning head C15 is mounted on the cleaning apparatus, the gravity center of the cleaning apparatus (including the cleaning head C15, as shown in FIG. 15) further shifts away from the battery, such that the supporting point is only located on the bottom surface of the dust bucket cover C3.

In some embodiments, a height difference between the base surface at the bottom of the dust bucket cover C3 and the base surface at the bottom of the battery C7 may be determined according to different situations, which is not limited in detail in the present invention. In some embodiments, for the purpose of a pleasant appearance and also for the safety of the charging electrode C11, the height difference may be generally set to 3 to 5 mm or more. The suction inlet 12 and the cleaning head C15 may be connected in an existing manner in which sleeving and locking through a buckle are adopted, or in other common manners in the art, which is not limited herein.

For the cleaning apparatus according to embodiments of the present invention, since two potential supporting surfaces are formed at the bottom of the battery C7 and at the bottom of the dust bucket A8, and since the charging electrode C11 is disposed at the bottom of the battery C7, and safe use of the charging electrode C11 is required to be ensured, the base surface of the battery C7 is isolated from the base surface of the dust bucket A8 in a longitudinal direction, such that when the cleaning apparatus is supported, the supporting surface is only formed on the bottom surface of the dust bucket cover C3 at the bottom of the dust bucket A8, thereby ensuring the charging electrode C11 to be dry and clean, and increasing the volume of the dust bucket A8.

The cleaning apparatus according to embodiments of the present invention includes a handle, a battery, a main body, a suction system, a dust bucket, a separation system, a suction inlet 12, and the like. A blower and a motor for driving the blower are disposed in a housing of the main body to form the suction system. The motor is started to supply power for the blower to suck dirty air from the suction inlet 12 into the separation system. The separation system is totally located in the dust bucket, and the suction inlet 12 is disposed at the upper portion of the dust bucket A8. The dirty air enters the dust bucket A8 in a tangential direction from the suction inlet 12 to form a primary cyclone in the upper space of the dust bucket A8, so as to separate large-particle garbage carried in the dirty air. Then, the air separated primarily enters a secondary separation system 4 for secondary cyclone separation, so as to further separate fine-particle garbage. The above large-particle garbage and fine-particle garbage fall into a first collection cavity 16 and a second collection cavity 14 respectively. After the secondary cyclone separation, the air further flows through a front filter screen A4 and then enters the space where the blower A6 is located, next, the air flows through a rear filter screen A7, and is finally discharged to the atmosphere through an air outlet C5. The rear filter screen A7 is formed of an annular structure, and sleeves the blower A6. The air flowing through the blower A6 passes through the rear filter screen A7 along a radial direction. The rear filter screen A7 is totally inserted into the housing of the main body in an axial direction and is fixed to form an airflow space between the housing of the main body and the rear filter screen A7, such that the airflow passing through the rear filter screen A7 may be discharged from the air outlet C5 disposed at the top of the main body in a substantially axial direction.

After considering the description and practicing the present invention, those skilled in the art may easily conceive of other implementations of the present invention. The present invention is intended to cover any variations, uses, or adaptations of the present invention that follow the general principle of the present invention and include common knowledge or techniques in the technical field not disclosed by the present invention. The description and embodiments are to be regarded as exemplary only, with the true scope and spirit of the present invention being indicated by the appended claims.

## Claims

1. A cleaning apparatus, comprising:
a suction system configured to generate a suction force for sucking dirty air into the cleaning apparatus;
a separation system configured to separate garbage in the dirty air, wherein the separation system comprises at least a primary separation system and a secondary separation system (4);
a filtering system configured to further filter air passing through the separation system; and
a garbage collection system, wherein the garbage collection system comprises at least a first garbage collection cavity (16) configured to collect the garbage passing through the primary separation system and a second garbage collection cavity (14) configured to collect the garbage passing through the secondary separation system (4);
wherein the secondary separation system (4) comprises a secondary cyclone separator (A1), and the secondary cyclone separator (A1) comprises:
at least one cyclone pipe (B1) configured to separate the dirty air;
an airflow inlet (A2) configured to provide an inlet allowing an airflow to enter the secondary cyclone separator (A1);
an overflow pipe (A3) configured to discharge the airflow from the secondary cyclone separator (A1);
a front filter screen (A4) disposed perpendicular to the overflow pipe (A3) and configured to filter the airflow discharged from the overflow pipe (A3); and
a front filter screen cover (A5) configured to fix the front filter screen (A4) in a front filter screen mounting groove.

2. The cleaning apparatus according to claim 1, wherein the front filter screen (A4) comprises a handle for holding the front filter screen (A4), to take the front filter screen (A4) out from the front filter screen mounting groove.

3. The cleaning apparatus according to claim 1, wherein the front filter screen cover (A5) is disposed on the secondary cyclone separator (A1) through a pivoting part (A9) disposed at one end of a diameter of the front filter screen cover (A5), and the pivoting part (A9) is configured to provide a rotary shaft for the front filter screen cover (A5) in an open state or a closed state.

4. The cleaning apparatus according to claim 3, wherein the front filter screen cover (A5) further comprises an operation part (A12) disposed at the other end of the diameter of the front filter screen cover (A5), and the operation part (A12) is configured to be used to open or close the front filter screen cover (A5).

5. The cleaning apparatus according to claim 1, wherein a rib (A10) is disposed on the front filter screen cover (A5), and the rib (A10) is configured to facilitate effective fixing of the front filter screen (A4) without affecting the airflow passing through the front filter screen (A4).

6. The cleaning apparatus according to claim 1, wherein the front filter screen (A4) is of a circular structure, and comprises a multi-layer filter screen in the middle, and a peripheral portion fixing the multi-layer filter screen.

7. The cleaning apparatus according to claim 6, wherein the front filter screen cover (A5) comprises a hollowed-out portion or a hollow portion, and an outer ring surrounding the hollowed-out portion or the hollow portion, and when the front filter screen cover (A5) is in a closed state, the outer ring is abutted against the peripheral portion of the front filter screen (A4).

8. The cleaning apparatus according to claim 7, wherein an area of the hollowed-out portion or the hollow portion is greater than or equal to an area of the multi-layer filter screen.

9. The cleaning apparatus according to claim 6, wherein an interior of the cyclone pipe (B1) is in a tapered shape, and the secondary cyclone separator (A1) further comprises:
an air inlet (B3) tangentially disposed at an upper portion of the cyclone pipe (B1);
an outlet located at an end of a lower portion of the cyclone pipe (B1),
wherein the cyclone pipe (B1) comprises peripheral cyclone pipes (B1) arranged circumferentially; and
a baffle plate (B2) extending outward between adjacent peripheral cyclone pipes (B1) along a direction away from the cyclone pipe (B1), and being substantially tangent to one of every two adjacent peripheral cyclone pipes (B1).

10. The cleaning apparatus according to claim 9, further comprising one or more central cyclone pipes (B1), wherein the peripheral cyclone pipes (B1) are disposed around the central cyclone pipe (B1).

11. The cleaning apparatus according to claim 9 or 10, wherein an airflow direction at the air inlet (B3) is substantially perpendicular to the baffle plate (B2).

12. The cleaning apparatus according to claim 11, wherein an outer partition plate (B8) is further disposed between adjacent peripheral cyclone pipes (B1), and the outer partition plate (B8) is connected to two adjacent peripheral cyclone pipes (B1).

13. The cleaning apparatus according to claim 12, wherein an inner partition plate (B7) is disposed between one or more central cyclone pipes (B1) and one or more peripheral cyclone pipes (B1) adjacent to the one or more central cyclone pipes (B1).

14. The cleaning apparatus according to claim 13, wherein a height at which a bottom of the inner partition plate (B7) is located is the same as a height at which a bottom of the baffle plate (B2) close to the cyclone pipe (B1) is located, and is lower than a height at which a bottom of the outer partition plate (B8) is located.

15. The cleaning apparatus according to claim 14, wherein exteriors of the cyclone pipes (B1) corresponding to a position where the bottom of the inner partition plate (B7) and the bottom of the baffle plate (B2) are at the same height cooperate with an airflow isolation plate (B12) to form sealing of the airflow.
